# EUROPÄISCHE PATENTANMELDUNG

(11) **EP 2 523 320 A1**
(43) Veröffentlichungstag der Anmeldung: **14.11.2012**
(21) Anmeldenummer: 11166062.7
(22) Anmeldetag: 13.05.2011
(51) Int. Cl.: H02K 41/03, H02K 16/00, H02K 1/27, H02K 7/00, H02K 7/08

(54) **Kombinationsantrieb für Dreh- und Hubbewegung und Linearmotor mit reduzierten Trägheiten**

(71) Anmelder: Siemens Aktiengesellschaft, 80333 München (DE)
(72) Erfinder: Fick, Michael, 97656, Sondernau (DE); Stäblein, Armin, 97650, Fladungen (DE); Vollmer, Rolf, 36129, Gersfeld (DE)

(57) **Zusammenfassung**

Die Dynamik eines Kombinationsantriebs bzw. Linearmotors soll verbessert werden. Es wird daher ein Kombinationsantrieb für Dreh- und Hubbewegungen mit einem Drehmotor (1) und einem Linearmotor (2) sowie einer Arbeitswelle (3) bereitgestellt, die von dem Drehmotor (1) in Drehbewegung und von dem Linearmotor (2) in Linearbewegung versetzbar ist, und die eine Abtriebsseite (4) aufweist. Der Drehmotor (1) ist näher an der Abtriebsseite (4) der Arbeitswelle (3) angeordnet als der Linearmotor (2). Dadurch kann die Arbeitswelle (3) kürzer gestaltet werden. Weitere Maßnahmen zur Erhöhung der Dynamik sind Massereduktionen am Läufer des Linearmotors (2).

## Beschreibung

Die vorliegende Erfindung betrifft einen Kombinationsantrieb für Dreh- und Hubbewegungen mit einem Drehmotor, einem Linearmotor und einer Arbeitswelle, die von dem Drehmotor in Drehbewegung und von dem Linearmotor in Linearbewegung versetzbar ist, und die eine Abtriebsseite aufweist.

Kombinationsantriebe werden für Antriebsaufgaben eingesetzt, die eine drehende und lineare Bewegung benötigen. Dabei ist es vorteilhaft, wenn diese Bewegungen unabhängig voneinander in Winkel und Weg frei eingestellt werden können. Hinzu kommt häufig die weitere Anforderung, dass die Bewegungen hochdynamisch erfolgen sollen.

Bislang wurden bei der Realisierung von Kombinationsantrieben meist relativ unflexible Antriebe mit Umlenkgetrieben eingesetzt. Die Dynamik des Kombinationsantriebs kann beispielsweise durch eine gezielte Entkopplung der Trägheiten für lineare und drehende Bewegung deutlich verbessert werden. Insbesondere ergibt sich dadurch eine gewünschte Steigerung des Beschleunigungsvermögens.

Die Aufgabe der vorliegenden Erfindung besteht darin, die Dynamik eines Kombinationsantriebs für Dreh- und Hubbewegungen oder die eines Linearmotors weiter zu steigern.

Erfindungsgemäß wird diese Aufgabe gelöst durch einen Kombinationsantrieb für Dreh- und Hubbewegungen mit
- einem Drehmotor,
- einem Linearmotor und
- einer Arbeitswelle, die von dem Drehmotor in Drehbewegung und von dem Linearmotor in Linearbewegung versetzbar ist, und die eine Abtriebsseite aufweist, wobei
- der Drehmotor näher an der Abtriebsseite der Arbeitswelle angeordnet ist als der Linearmotor.

Dadurch, dass der Drehmotor näher an der Abtriebsseite der Arbeitswelle angeordnet ist als der Linearmotor (d.h. der Drehmotor ist am Abtrieb bzw. an der Abtriebsseite des Kombinationsantriebs angeordnet) muss die Arbeitswelle nicht komplett durch den Linearmotor hindurchragen. Dies aber führt zu einer Reduktion der Länge der Arbeitswelle gegenüber dem Fall, dass der Drehmotor auf der gegenüberliegenden Seite des Linearmotors angeordnet ist. Damit aber ergibt sich eine Reduktion der Masse der Arbeitswelle und somit eine Reduzierung der Trägheit des Kombinationsantriebs insgesamt.

Der Linearmotor kann rohrförmig ausgebildet sein. Derartige Linearmotoren zeichnen sich durch eine hohe Kraftdichte über der Länge aus.

Die obige Aufgabe wird auch gelöst durch einen zylindrischen Linearmotor insbesondere für einen Kombinationsantrieb für Dreh- und Hubbewegungen mit
- einem rohrförmigen Läufer, auf welchem Permanentmagnete in axialer Richtung angeordnet sind, und
- einer Arbeitswelle, die von dem Linearmotor in Linearbewegung versetzbar ist, wobei
- die Wandstärke des Läufers in axialer Richtung zumindest bereichsweise entsprechend der Anordnung der Permanentmagnete variiert.

Der Vorteil der Variation der Wandstärke des Läufers in axialer Richtung besteht darin, dass die Wandstärke in einigen Bereichen des Läufers geringer ist als die maximale Wandstärke. Dadurch ergibt sich eine Verminderung der Trägheit des Läufers gegenüber dem Fall, dass die Wandstärke des Läufers entlang der gesamten axialen Erstreckung dem Maximalwert entspricht und vor allem konstant ist. Insbesondere wird dabei die Kenntnis ausgenutzt, dass in gewissen Bereichen eines Läufers mit konstanter Wandstärke der magnetische Fluss geringer ist als an anderen Stellen. Die Ausprägung des magnetischen Flusses variiert nämlich entsprechend der Polteilung. Im Sinne einer verbesserten Dynamik ist es dann nicht notwendig, diejenigen Abschnitte der Läuferwand bereitzuhalten, die nur einen geringen Magnetfluss führen.

Vorzugsweise besitzt die Innenwand des rohrförmigen Läufers in axialer Richtung ein wellenartiges Profil. Besonders vorteilhaft ist, wenn dieses wellenartige Profil der Ausbreitung des magnetischen Flusses in dem weichmagnetischen Läufermaterial nachempfunden ist.

Bei einer speziellen Ausführungsform sind die Permanentmagnete auf dem Läufer entsprechend einer Polteilung angeordnet, und die Wandstärke des Läufers ist kleiner oder gleich einem Drittel der Polteilung. Eine derartige Wandstärke gewährleistet einen verhältnismäßig ungehinderten Magnetfluss bei gleichzeitiger Minimierung des Gewichts.

In einer speziellen Ausführungsform kann in den Läufer ein Kunststoffrohr eingesetzt sein, das den Läufer versteift. Dies hat den Vorteil, dass dadurch die mechanische Festigkeit des Läufers durch ein Material erhöht werden kann, das leichter ist als das ferroelektrische Material des Läufers.

Dabei kann insbesondere der Hohlraum zwischen dem Läufer und dem Kunststoffrohr ausgegossen sein. Auch diese Maßnahme erhöht zusätzlich die Steifigkeit des Läufers mit dünner Wandstärke.

Erfindungsgemäß ist außerdem vorgesehen ein zylindrischer Linearmotor insbesondere für einen Kombinationsantrieb für Dreh- und Hubbewegungen mit
- einem rohrförmigen Läufer, auf welchem Permanentmagnete angeordnet sind, wobei ein überwiegender Teil der Permanentmagnete in Umfangsrichtung durch einen Regelabstand voneinander beabstandet sind, und
- einer Arbeitswelle, die von dem Linearmotor in Linearbewegung versetzbar ist, wobei
- in axialer Richtung mindestens eine Lücke verläuft, durch die einige der Permanentmagnete in Umfangsrichtung weiter als der Regelabstand voneinander beabstandet sind.

In vorteilhafter Weise ist also eine Magnetlücke in tangentialer Richtung bzw. Umfangsrichtung auf dem Läufer vorgesehen. Eine derartige Magnetlücke ist insbesondere dann sinnvoll, wenn auch der Ständer an dieser Stelle eine magnetische Lücke besitzt. Somit können unnötige Permanentmagnete eingespart werden, sodass der Gewichtsanteil der Permanentmagnete am Läufer sinkt.

Vorzugsweise beträgt das Verhältnis zwischen einer Bedeckung des Läufers mit Magneten in axialer Richtung und der Polteilung 50% bis 85%. In diesem Prozentbereich ergibt sich ein geringes Gewicht bei hohem Wirkungsgrad.

Des Weiteren ist erfindungsgemäß vorgesehen ein zylindrischer Linearmotor insbesondere für einen Kombinationsantrieb für Dreh- und Hubbewegungen mit
- einem rohrförmiger Läufer, der mindestens ein Läuferlagerschild aufweist, und
- einer Arbeitswelle, die von dem Linearmotor in Linearbewegung versetzbar ist, und die eine Abtriebsseite aufweist, wobei
- das Läuferlagerschild, an dem auch die Arbeitswelle befestigt ist, Speichen aufweist.

In vorteilhafter Weise ist also das Läuferlagerschild nicht massiv ausgeführt, sondern besitzt Speichen. Die Speichen bringen die nötige radiale Steifigkeit, und die Durchbrüche in dem Läuferlagerschild zwischen den Speichen führen zu einer entsprechenden Gewichtseinsparung.

Schließlich wird erfindungsgemäß auch bereitgestellt ein zylindrischer Linearmotor insbesondere für einen Kombinationsantrieb für Dreh- und Hubbewegungen mit
- einem rohrförmigen Ständer,
- einem rohrförmigen Läufer, wobei der rohrförmige Läufer mindestens ein Läuferlagerschild aufweist, und
- einer Arbeitswelle, die von dem Linearmotor in Linearbewegung versetzbar ist, wobei
- das Läuferlagerschild ein Gleitlager aufweist, an dem es linear beweglich an einer Führungsstange des Ständers gelagert ist.

In vorteilhafter Weise ist also der Läufer nicht mithilfe eines Kugellagers oder Wälzlagers am Ständer linear gelagert. Vielmehr wird für die Linearlagerung ein Gleitlager eingesetzt, das deutlich gewichtsärmer als die genannten anderen Lagerarten ist.

Außerdem ist es von Vorteil, wenn die Arbeitswelle eine Hohlwelle ist. Auch dies führt zu einer Gewichtseinsparung und somit zu einer Trägheitsreduktion des Kombinationsantriebs verglichen mit einem Antrieb mit Vollwelle.

Die oben geschilderten Maßnahmen und Lösungsmöglichkeiten der genannten Aufgabe können beliebig kombiniert werden. So kann beispielsweise ein Kombinationsantrieb den Drehmotor näher an der Abtriebsseite der Arbeitswelle haben als der Linearmotor, und gleichzeitig ist die Wandstärke des Läufers in axialer Richtung zumindest bereichsweise entsprechend der Anordnung der Permanentmagnete variiert. Auch kann der Kombinationsantrieb einen Läufer mit Magnetlücke in Umfangsrichtung und ein Läuferlagerschild mit Speichen aufweisen. Ferner können die genannten Linearmotoren bzw. Kombinationsantriebe auch zusätzlich Gleitlager zum Lagern des Läufers aufweisen. Insbesondere kann ein Kombinationsantrieb auch sämtliche oben genannten Merkmale gleichzeitig aufweisen, sofern diese nicht als Alternativen genannt sind.

Die vorliegende Erfindung wird nun anhand der beigefügten Zeichnungen näher erläutert, in denen zeigen:
- FIG 1: einen Querschnitt durch einen erfindungsgemäßen Kombinationsantrieb für Dreh- und Hubbewegungen;
- FIG 2: einen Querschnitt durch einen Läufer eines Linearmotors beispielsweise des Kombinationsantriebs von FIG 1;
- FIG 3: den Läufer von FIG 2 in perspektivischer Ansicht;
- FIG 4: den Läufer von FIG 3 auf Führungsstangen zur linearen Lagerung und
- FIG 5: einen Längsschnitt durch den Läufer von FIG 4.

Die nachfolgend näher geschilderten Ausführungsbeispiele stellen bevorzugte Ausführungsformen der vorliegenden Erfindung dar.

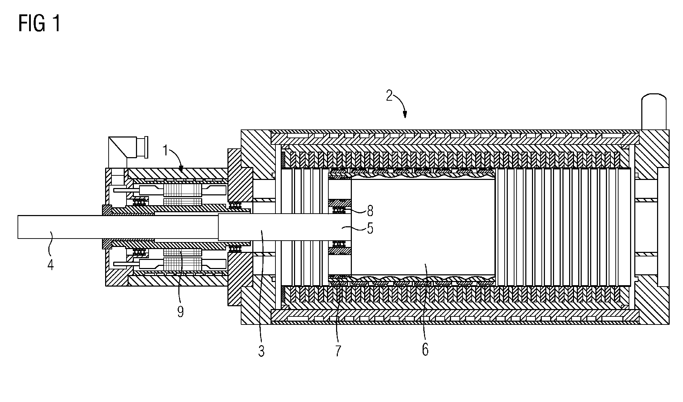

Der in FIG 1 dargestellte Kombinationsantrieb für Dreh- und Hubbewegungen kann beispielsweise für Werkzeugmaschinen oder Roboter eingesetzt werden. Er besitzt einen Drehmotor 1 und einen Linearmotor 2. Beide treiben eine Arbeitswelle 3 an.

Der Kombinationsantrieb besitzt einen Abtrieb, durch den die Nutzleistung zur Verfügung gestellt wird. In dem Beispiel von FIG 1 liegt der Abtrieb links, und die entsprechende Nutzleistung wird durch die Arbeitswelle 3 zur Verfügung gestellt. Dementsprechend besitzt die Arbeitswelle 3 eine Abtriebsseite 4 und eine Antriebsseite 5.

Der Drehmotor 1 (Motor für Drehbewegung bzw. Rotationsmotor) befindet sich näher am Abtrieb des Kombinationsantriebs als der Linearmotor 2. Dies bedeutet aber auch, dass sich der Drehmotor 1 näher an der Abtriebsseite 4 der Arbeitswelle 3 befindet als der Linearmotor 2.

Die Arbeitswelle 3 ragt hier vollständig durch den Drehmotor 1, und ihre Antriebsseite 5 ist am Läufer 6 des Linearmotors 2 gelagert. Der Linearmotor 2 ist hier zylindrisch ausgeführt. Somit besitzt auch der Läufer 6 zylindrische bzw. rohrförmige Gestalt. An der dem Drehmotor 1 bzw. dem Abtrieb zugewandten Seite besitzt der Läufer 6 ein Lagerschild 7, in dem die Arbeitswelle 3 drehbar gelagert ist. Dazu ist ein entsprechendes Axiallager 8 vorgesehen. Somit ist die Arbeitswelle 3 an dem rohrförmigen Läufer 6 axial fixiert aber rotatorisch entkoppelt.

Mit dem Läufer 9 des Drehmotors 1 ist die Arbeitswelle 3 hingegen drehfest verbunden. Dies wird beispielsweise durch entsprechende Nuten und Federn an der Arbeitswelle 3 und am Rotor 9 erreicht. Dadurch ist die Arbeitswelle 3 in dem Drehmotor 1 axial verschiebbar. Die Arbeitswelle ist somit von dem Drehmotor 1 axial bezüglich der Linearbewegung des Linearmotors entkoppelt.

Bei diesem Kombinationsantrieb sind somit der Läufer 6 des Linearmotors 2 und der Läufer 9 des Drehmotors 1 voneinander entkoppelt. Dadurch reduziert sich die Trägheit des Antriebs deutlich.

Eine weitere Reduktion der Trägheit ist dadurch erreicht, dass der Drehmotor 1 abtriebsseitig angeordnet ist. Dadurch muss die Arbeitswelle 3 nicht durch den gesamten Linearmotor 2 ragen. Deswegen kann die Arbeitswelle 3 wesentlich kürzer ausgebildet werden als in dem Fall, dass der Drehmotor an der anderen Seite des Linearmotors 2 angeordnet ist. In letzterem Fall muss nämlich die Arbeitswelle 3 nicht nur durch den Linearmotor 2, sondern auch mit mindestens dem linearen Hub in den Drehmotor ragen, wenn diese linear hintereinander angeordnet sind.

Dies bringt insbesondere bei einem großen Hub des Linearmotors deutliche Vorteile, denn die Arbeitswelle 3 muss dann eben nicht durch den langen Linearmotor geführt werden. Damit kann die Arbeitswelle 3 kurz und somit masse- und trägheitsarm gebaut werden.

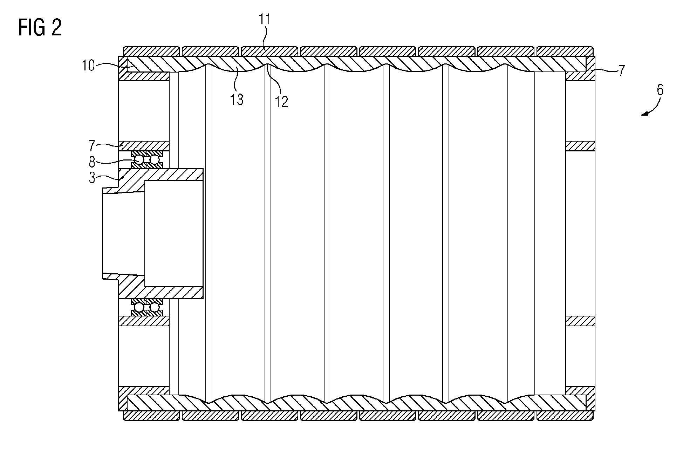

Die Trägheit des Linearmotors und damit des Kombinationsantriebs hinsichtlich seiner Linearbewegung kann weiter dadurch reduziert werden, dass die Masse des Läufers des Linearmotors reduziert wird. Dies kann gemäß FIG 2 bei dem zylindrischen Linearmotor dadurch realisiert werden, dass die Masse des Läuferrohrs 10 des Läufers 6 reduziert wird.

Das Läuferrohr 10 ist aus einem ferromagnetischen Material gefertigt und trägt an seiner Außenseite in Umfangsrichtung verteilt Permanentmagnete 11. Das Läuferrohr 10 hat die Aufgabe, die Magnetfelder der Permanentmagnete 11 zu führen bzw. zu konzentrieren. Um diese Aufgabe hinreichend erfüllen zu können, ist eine gewisse Wandstärke des Läuferrohrs 10 notwendig.

In axialer Richtung sind auf dem Läuferrohr 10 eine Vielzahl an Permanentmagneten 11 angeordnet. Im vorliegenden Fall sind es acht Permanentmagnete axial hintereinander. Dementsprechend bilden sich in axialer Richtung auf dem Läufer acht Pole aus. Der magnetische Rückschluss von zwei benachbarten Polen erfolgt über das ferromagnetische Läuferrohr 10. Der entsprechende magnetische Fluss bildet sich in dem Läuferrohr 10 bogenförmig aus. Zwischen zwei Permanentmagneten 11 erreicht er seine tiefste Stelle im Läuferrohr 10. Am geringsten ist der magnetische Fluss im Läuferrohr 10 in der Mitte unter jedem der Permanentmagnete, die hier mit abwechselnder Polarität (Nordpol, Südpol) angeordnet sind.

Entsprechend dem erfindungsgemäßen Gedanken wird an dem Antrieb dort Masse eingespart, wo sie entbehrt werden kann. Im vorliegenden Beispiel wird der größte Anteil des jeweiligen magnetischen Flusses nur in einem geringen Bereich des Läuferrohrs 10 geführt. Auf Bereiche, in denen bei einem Läuferrohr mit konstanter Wandstärke nur ein geringer Teil des magnetischen Flusses geführt wird, kann daher verzichtet werden. Dementsprechend wird hier die Innenkontur des Läuferrohrs 10 an die Form der Magnetfelder bzw. magnetischen Flüsse angepasst. Da unmittelbar unter den einzelnen Permanentmagneten 11 die geringsten magnetischen Flüsse auftreten, wird dort das Material ausgespart. Die Wandstärke des Läuferrohrs 10 ist dort entsprechend am geringsten. Diese Orte geringer Wandstärke 12 erstrecken sich entlang des gesamten Umfangs des Läuferrohrs 10. Sie befinden sich hier in der Mitte unter jedem Permanentmagneten 11 bzw. hinter jeder am Umfang gebildeten Reihe von Permanentmagneten 11. Ausnahmen bestehen hier lediglich bei den stirnseitigen Permanentmagneten 11, denn dort ist die Wandstärke des Läuferrohrs aus Montage- bzw. Stabilitätsgründen nicht reduziert.

Zwischen den Orten 12 minimaler Wandstärke des Läuferrohrs 10 ergeben sich entsprechende Orte 13 maximaler Wandstärke. Dort ist der magnetische Fluss am größten.

Während die Außenfläche des zylindrischen Läuferrohrs 10 in axialer Richtung gerade verläuft, besitzt die Innenfläche des zylindrischen Läuferrohrs 10 in axialer Richtung entsprechende Wellen- bzw. Kurvenform. Sie ist geprägt durch die Orte 12 minimaler Wandstärke und die Orte 13 maximaler Wandstärke des Läuferrohrs 10. Der axiale Abstand zwischen den Minima 12 und den Maxima 13 resultiert aus der Polteilung. Insbesondere entspricht der Abstand zweier Minima 12 bzw. zweier Maxima 13 der Polteilung des Linearmotors.

Dadurch, dass die Wandstärke des weichmagnetischen Läuferrohrs 10 somit an gewissen Orten 12 reduziert ist, ergibt sich eine entsprechende verminderte Masse des Läufers 6. Prinzipiell könnte die Wandstärke an diesen Orten 12 den Wert 0 mm betragen, was jedoch aus praktischer Sicht ungünstiger ist. Daher wird die minimale Wandstärke auf die notwendige Steifigkeit abgestimmt sein.

Hinsichtlich der maximalen Wandstärke an den entsprechenden Orten 13 hat sich herausgestellt, dass eine Wandstärke von einem Drittel der Polteilung als optimal angesehen werden kann. Diese Wandstärke gewährleistet den notwendigen magnetischen Fluss bei geringstem Materialaufwand.

Durch die Reduktion der Wandstärke des Läuferrohrs 10 nimmt auch die Steifigkeit des Läuferrohrs ab. Zur Versteifung kann daher eine massearme Tragkonstruktion aus Materialien geringer Dichte eingebaut werden. Beispielsweise wird dazu ein Kunststoffrohr in das Läuferrohr 10 eingesetzt. Das Kunststoffrohr kann kohle- bzw. glasfaserverstärkt sein. Es besitzt eine geringere Dichte als das weichmagnetische Läuferrohr 10. Dennoch kann es die Steifigkeit des Läufers 6 deutlich erhöhen, wenn es beispielsweise in das weichmagnetische Läuferrohr 10 eingepresst ist. Hohlräume, die sich zwischen dem weichmagnetischen Läuferrohr 10 und dem Kunststoffrohr bilden, können ggf. ausgegossen werden. Dadurch wird die Steifigkeit weiter erhöht.

In dem Ausführungsbeispiel von FIG 2 ist an beiden Stirnseiten des Läufers 6 ein Läuferlagerschild 7 angeordnet. In dem linken Läuferlagerschild 7 befindet sich ein Axiallager 8 (vergleiche FIG 1) in dem die Arbeitswelle 3 gelagert ist. In FIG 2 ist nur ein Stumpf dieser Arbeitswelle 3 dargestellt. Die Arbeitswelle 3 ist hier außerdem als Hohlwelle ausgebildet. Dadurch wird gegenüber einer Vollwelle Masse eingespart, was sich wiederum positiv für die Trägheit auswirkt.

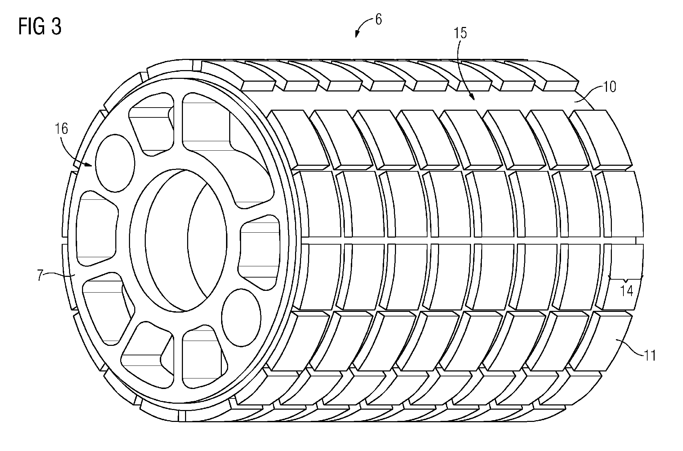

Anhand von FIG 3 wird nun eine weitere Maßnahme erläutert, um die Trägheit des Linearmotors und damit ggf. auch des Kombinationsantriebs zu vermindern. FIG 3 zeigt den Läufer von FIG 2 in perspektivischer Ansicht. Auf dem Läuferrohr 10 befinden sich auf der gesamten Außenfläche verteilt die Permanentmagnete 11. Sie sind hier rechteckförmig ausgestaltet und in einem Raster auf der Oberfläche angeordnet. In axialer Richtung befinden sich hier acht Permanentmagnete 11 hintereinander. Sie führen zu einer entsprechenden Polteilung 14.

Die Permanentmagnete 11 auf dem Läufer 6 bedecken diesen nicht vollständig. Sie führen vielmehr zu einer Teilpolbedeckung. Dabei ist es besonders vorteilhaft, wenn die axiale Polbedeckung 50% bis 85% der Polteilung beträgt. Durch dieses spezielle Verhältnis von Polbedeckung zu Polbreite wird das Verhältnis von Kraft und Masse erhöht. Zusätzlich können so Permanentmagnete eingespart werden, wodurch die Magnetkosten des Läufers sinken.

Auch in Umfangsrichtung kann die Polbedeckung ggf. reduziert werden. Dies ist insbesondere dann der Fall, wenn der Ständer des Linearmotors in Umfangsrichtung magnetische Lücken aufweist, die beispielsweise von einer axial verlaufenden Schaltung der Ringspulen des Ständers herrühren. In dem Beispiel von FIG 3 ist daher in Umfangsrichtung bzw. tangentialer Richtung eine Magnetlücke 15 auf dem Läuferrohr 10 vorgesehen. Sie ist breiter als der Regelabstand (regelmäßiger Abstand) der Permanentmagnete in Umfangsrichtung, den die überwiegende Anzahl der Permanentmagnete am Umfang zueinander haben. Da sich der Läufer 6 nicht dreht, befindet sich die Magnetlücke 15 radial unterhalb der magnetischen Lücke im Ständer. Permanentmagnete an dieser Stelle des Läufers würden hier wenig Nutzen bringen und werden daher eingespart. Damit ergibt sich wiederum eine Masse- bzw. Trägheitsreduktion.

Am Umfang des Läufers verteilt können eine oder mehrere derartige Magnetlücken 15 angeordnet sein. Sie erstrecken sich in axialer Richtung über die gesamte Länge des Läufers 6.

Eine weitere Möglichkeit, die Masse des Läufers 6 zu reduzieren besteht darin, Material bei dem bzw. den Läuferlagerschilden 7 einzusparen. Insbesondere ist es günstig, wenn das Läuferlagerschild 7 des zylindrischen Läufers 6 entsprechende Aussparungen aufweist. Im Beispiel von FIG 3 weist das Läuferlagerschild 7 am Umfang verteilt mehrere Aussparungen auf, sodass zwischen den einzelnen Aussparungen lediglich Speichen 16 stehen bleiben. Die Speichen 16 sorgen für die notwendige Steifigkeit, und es wird unnötiges Material in dem Läuferlagerschild vermieden. Das Läuferlagerschild mit Speichen führt also auch zu einer Trägheitsreduktion.

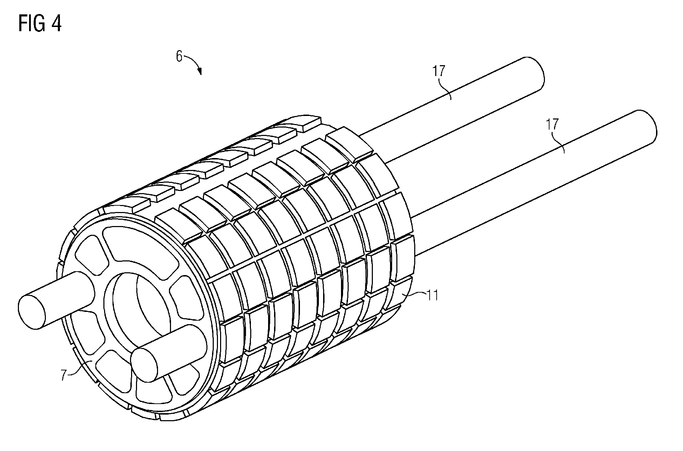

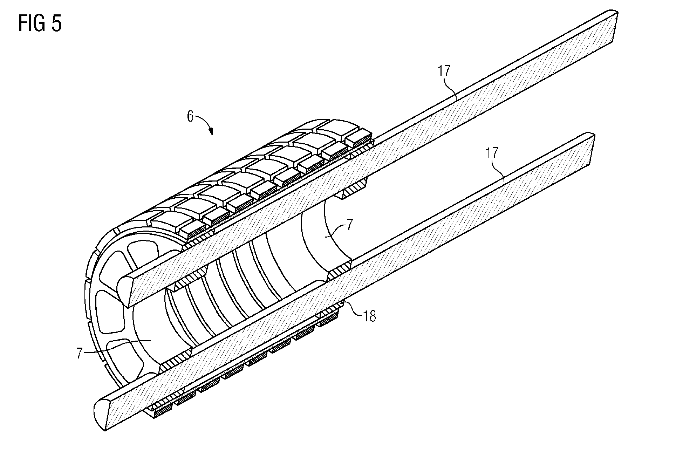

Anhand der FIG 4 und FIG 5 wird eine weitere Ausführungsform der vorliegenden Erfindung dargestellt, mit der die Trägheit eines zylindrischen Linearmotors reduziert werden kann. Der in FIG 4 dargestellte Läufer 6 entspricht demjenigen von FIG 3. Der Läufer 6 besitzt an beiden Stirnseiten ein Lagerschild 7. Durch die beiden Lagerschilde 7 sind hier in axialer Richtung zwei Führungsstangen 17 geführt. Auf den Führungsstangen 17 ist der Läufer 6 drehfest aber linear beweglich gelagert.

Der Längsschnitt von FIG 5 zeigt die Lagerung des Läufers 6 an den Führungsstangen 17 im Detail. Eine Gewichtseinsparung kann dadurch erreicht werden, dass anstelle von Kugel- bzw. Wälzlagern Gleitlager eingesetzt werden. Im Beispiel von FIG 5 sind daher entsprechende Gleitbuchsen 18 in den Lagerläuferschilden 7 vorgesehen. In den Gleitbuchsen 18 sind die Führungsstangen 17 linear beweglich. Die Führungsstangen 17 sind an dem Ständer des Linearmotors befestigt, sodass damit der zylindrische Läufer 6 im Inneren des zylindrischen Ständers des Linearmotors linear beweglich ist. Die massearmen Gleitbuchsen 18 lassen entsprechend dynamischere Bewegungen des Läufers 6 zu.

Mit all den oben genannten Maßnahmen kann somit ein Linearmotor bzw. Kombinationsantrieb mit höherem Beschleunigungsvermögen erreicht werden. Jedes genannte Merkmal trägt seinen Anteil zur Verbesserung der Dynamik bei.

## Patentansprüche

1. Kombinationsantrieb für Dreh- und Hubbewegungen mit
- einem Drehmotor (1),
- einem Linearmotor (2) und
- einer Arbeitswelle (3), die von dem Drehmotor in Drehbewegung und von dem Linearmotor in Linearbewegung versetzbar ist, und die eine Abtriebsseite (4) aufweist,
**dadurch gekennzeichnet, dass**
- der Drehmotor (1) näher an der Abtriebsseite (4) der Arbeitswelle (3) angeordnet ist als der Linearmotor (2).

2. Kombinationsantrieb nach Anspruch 1, wobei der Linearmotor (2) rohrförmig ausgebildet ist.

3. Zylindrischer Linearmotor (2) insbesondere für einen Kombinationsantrieb für Dreh- und Hubbewegungen mit
- einem rohrförmigen Läufer (6), auf welchem Permanentmagnete (11) in axialer Richtung angeordnet sind, und
- einer Arbeitswelle (3), die von dem Linearmotor in Linearbewegung versetzbar ist,
**dadurch gekennzeichnet, dass**
- die Wandstärke des Läufers (6) in axialer Richtung zumindest bereichsweise entsprechend der Anordnung der Permanentmagnete variiert.

4. Zylindrischer Linearmotor nach Anspruch 3, wobei die Innenwand des rohrförmigen Läufers (6) in axialer Richtung ein wellenartiges Profil aufweist.

5. Zylindrischer Linearmotor nach Anspruch 3 oder 4, wobei die Permanentmagnete (11) auf dem Läufer (6) entsprechend einer Polteilung (14) angeordnet sind und die Wandstärke des Läufers kleiner oder gleich einem Drittel der Polteilung ist.

6. Zylindrischer Linearmotor nach einem der Ansprüche 3 bis 5, wobei in den Läufer (6) ein Kunststoffrohr eingesetzt ist, das den Läufer versteift.

7. Zylindrischer Linearmotor nach Anspruch 6, wobei ein Hohlraum zwischen dem Läufer (6) und dem Kunststoffrohr ausgegossen ist.

8. Zylindrischer Linearmotor (2) insbesondere für einen Kombinationsantrieb für Dreh- und Hubbewegungen mit
- einem rohrförmigen Läufer (6), auf welchem Permanentmagnete (11) angeordnet sind, wobei ein überwiegender Teil der Permanentmagnete in Umfangsrichtung durch einen Regelabstand voneinander beabstandet sind, und
- einer Arbeitswelle (3), die von dem Linearmotor in Linearbewegung versetzbar ist,
**dadurch gekennzeichnet, dass**
- in axialer Richtung mindestens eine Lücke (15) verläuft, durch die einige der Permanentmagnete (11) in Umfangsrichtung weiter als der Regelabstand voneinander beabstandet sind.

9. Zylindrischer Linearmotor nach Anspruch 8, wobei das Verhältnis zwischen einer Bedeckung des Läufers (6) mit Permanentmagneten (11) in axialer Richtung und der Polteilung (14) 50% bis 85% beträgt.

10. Zylindrischer Linearmotor (2) insbesondere für einen Kombinationsantrieb für Dreh- und Hubbewegungen mit
- einem rohrförmiger Läufer (6), der mindestens ein Läuferlagerschild (7) aufweist, und
- einer Arbeitswelle (3), die von dem Linearmotor in Linearbewegung versetzbar ist,
**dadurch gekennzeichnet, dass**
- das Läuferlagerschild (7), an dem auch die Arbeitswelle befestigt ist, Speichen (16) aufweist.

11. Zylindrischer Linearmotor (2) insbesondere für einen Kombinationsantrieb für Dreh- und Hubbewegungen mit
- einem rohrförmigen Ständer,
- einem rohrförmigen Läufer (6), wobei der rohrförmige Läufer mindestens ein Läuferlagerschild (7) aufweist, und
- einer Arbeitswelle (3), die von dem Linearmotor in Linearbewegung versetzbar ist,
**dadurch gekennzeichnet, dass**
- das Läuferlagerschild (7) ein Gleitlager (8) aufweist, an dem es linear beweglich an einer Führungsstange (17) des Ständers gelagert ist.

12. Zylindrischer Linearmotor nach einem der Ansprüche 3 bis 11, wobei die Arbeitswelle (3) eine Hohlwelle ist.

13. Zylindrischer Linearmotor nach einem der Ansprüche 3 bis 12, wobei der Drehmotor (1) näher an der Abtriebsseite (4) der Arbeitswelle (3) angeordnet ist als der Linearmotor (2).

14. Kombinationsantrieb nach Anspruch 1 oder 2 oder zylindrischer Linearmotor (2) nach einem der Ansprüche 8 bis 12, wobei der Läufer (6) rohrförmig ist und Permanentmagnete (11) besitzt, und wobei die Wandstärke des Läufers in axialer Richtung zumindest bereichsweise entsprechend der Anordnung der Permanentmagnete variiert.

15. Kombinationsantrieb nach Anspruch 1 oder 2 oder zylindrischer Linearmotor nach einem der Ansprüche 3 bis 7, 10 und 11, wobei auf dem Läufer (6) Permanentmagnete (11) angeordnet sind, ein überwiegender Teil der Permanentmagnete in Umfangsrichtung durch einen Regelabstand voneinander beabstandet sind, und in axialer Richtung mindestens eine Lücke (15) verläuft, durch die einige der Permanentmagnete in Umfangsrichtung weiter als der Regelabstand voneinander beabstandet sind.

16. Kombinationsantrieb nach Anspruch 2 oder zylindrischer Linearmotor nach einem der Ansprüche 3 bis 9 und 11, wobei der rohrförmige Läufer (6) mindestens ein Läuferlagerschild (7) aufweist, das Speichen (16) besitzt.

17. Kombinationsantrieb nach Anspruch 2 oder zylindrischer Linearmotor nach einem der Ansprüche 3 bis 10, wobei der Linearmotor (2) einen rohrförmigen Ständer und einen rohrförmigen Läufer (6) mit Läuferlagerschild (7) aufweist, und wobei das Läuferlagerschild ein Gleitlager (18) aufweist, an dem es linear beweglich an einer Führungsstange (17) des Ständers gelagert ist.

## Geänderte Patentansprüche

### Geänderte Patentansprüche gemäss Regel 137(2) EPÜ.

**1.** Zylindrischer Linearmotor (2) insbesondere für einen Kombinationsantrieb für Dreh- und Hubbewegungen mit
- einem rohrförmigen Läufer (6), auf welchem Permanentmagnete (11) angeordnet sind, wobei ein überwiegender Teil der Permanentmagnete in Umfangsrichtung durch einen Regelabstand voneinander beabstandet sind, und
- einer Arbeitswelle (3), die von dem Linearmotor in Linearbewegung versetzbar ist,
**dadurch gekennzeichnet, dass**
- in axialer Richtung mindestens eine Lücke (15) verläuft, durch die einige der Permanentmagnete (11) in Umfangsrichtung weiter als der Regelabstand voneinander beabstandet sind.

**2.** Zylindrischer Linearmotor nach Anspruch 1, wobei das Verhältnis zwischen einer Bedeckung des Läufers (6) mit Permanentmagneten (11) in axialer Richtung und der Polteilung (14) 50% bis 85% beträgt.

**3.** Zylindrischer Linearmotor nach einem der Ansprüche 1 oder 2, wobei die Arbeitswelle (3) eine Hohlwelle ist.

**4.** Zylindrischer Linearmotor nach einem der Ansprüche 1 bis 3, wobei der Läufer (6) rohrförmig ist und Permanentmagnete (11) besitzt, und wobei die Wandstärke des Läufers in axialer Richtung zumindest bereichsweise entsprechend der Anordnung der Permanentmagnete variiert.

**5.** Zylindrischer Linearmotor nach einem der Ansprüche 2 bis 4, wobei der rohrförmige Läufer (6) mindestens ein Läuferlagerschild (7) aufweist, an dem insbesondere auch die Arbeitswelle befestigt ist, das Speichen (16) besitzt.

**6.** Zylindrischer Linearmotor nach einem der Ansprüche 1 bis 5, wobei der Linearmotor (2) einen rohrförmigen Ständer aufweist, und wobei das Läuferlagerschild ein Gleitlager (18) aufweist, an dem es linear beweglich an einer Führungsstange (17) des Ständers gelagert ist.

**7.** Zylindrischer Linearmotor nach Anspruch 4, wobei eine Innenwand des rohrförmigen Läufers (6) in axialer Richtung ein wellenartiges Profil aufweist.

**8.** Zylindrischer Linearmotor nach Anspruch 4, wobei die Permanentmagnete (11) auf dem Läufer (6) entsprechend einer Polteilung (14) angeordnet sind und die Wandstärke des Läufers kleiner oder gleich einem Drittel der Polteilung ist.

**9.** Zylindrischer Linearmotor nach einem der Ansprüche 1 bis 8, wobei in den Läufer (6) ein Kunststoffrohr eingesetzt ist, das den Läufer versteift.

**10.** Zylindrischer Linearmotor nach Anspruch 9, wobei ein Hohlraum zwischen dem Läufer (6) und dem Kunststoffrohr ausgegossen ist.

**11.** Kombinationsantrieb für Dreh- und Hubbewegungen mit
- einem Drehmotor (1),
- einem Linearmotor (2) nach wenigstens einem der Ansprüche 1 bis 10, und
- einer Arbeitswelle (3), die von dem Drehmotor in Drehbewegung und von dem Linearmotor in Linearbewegung versetzbar ist, und die eine Abtriebsseite (4) aufweist, **dadurch gekennzeichnet, dass**
- der Drehmotor (1) näher an der Abtriebsseite (4) der Arbeitswelle (3) angeordnet ist als der Linearmotor (2).

**12.** Kombinationsantrieb nach Anspruch 11, wobei der Linearmotor (2) rohrförmig ausgebildet ist.
